# FASCICULE DE BREVET EUROPEEN

(11) **EP 4 107 066 B1**
(45) Date de publication et mention de la délivrance du brevet: **17.07.2024**
(21) Numéro de dépôt: 21708062.1
(22) Date de dépôt: 16.02.2021
(51) Int. Cl.: B64C 39/02

(54) **SYSTEME AERIEN DE TRANSPORT ET DE LIVRAISON DE COLIS SANS PILOTE HUMAIN EMBARQUE, PROCEDE LOGISTIQUE MIS EN OEUVRE DANS CE SYSTEME ET DISPOSITIF AEROSTATIQUE INTEGRE DANS CE SYSTEME**
FLUGZEUGGESTÜTZTES SYSTEM FÜR DEN TRANSPORT UND DIE ZUSTELLUNG VON PAKETEN OHNE MENSCHLICHEN PILOTEN AN BORD, IN DIESEM SYSTEM VERWENDETES LOGISTIKVERFAHREN UND IN DIESES SYSTEM INTEGRIERTE AEROSTATISCHE VORRICHTUNG
AERIAL SYSTEM FOR TRANSPORTING AND DELIVERING PARCELS WITHOUT A HUMAN PILOT ON BOARD, LOGISTICS METHOD USED IN THIS SYSTEM AND AEROSTATIC DEVICE INTEGRATED IN THIS SYSTEM

(30) Priorité: 18.02.2020 FR 2001602
(43) Date de publication de la demande: 28.12.2022
(73) Titulaire: Taupin, Sébastien, 75016 Paris (FR); Allano, Sylvain, 91310 Montlhéry (FR)
(72) Inventeur: Taupin, Sébastien, 75016 Paris (FR); Allano, Sylvain, 91310 Montlhéry (FR)
(74) Mandataire: IP Trust
(86) Numéro de dépôt international: PCT/FR2021/050270
(87) Numéro de publication internationale: WO 2021/165610

(56) Documents cités:
- EP-A1- 3 013 686
- US-A1- 2016 378 108
- US-A1- 2020 050 200
- US-B1- 10 246 186
- US-B2- 10 267 949
- US-B2- 9 852 644

## Description

### DOMAINE DE L'INVENTION

La présente invention concerne un système aérien de transport et de livraison de colis sans pilote humain embarqué. Elle vise également un procédé logistique mis en oeuvre dans ce système, ainsi qu'un dispositif aérostatique intégré dans ce système.

Le domaine de l'invention est celui de la logistique et de la distribution de biens, notamment de colis.

### ARRIERE-PLAN TECHNOLOGIQUE

Il existe à ce jour de nombreux systèmes de transport et de livraison de colis et d'objets à base de drones. Ces systèmes à base de drones présentent tous l'inconvénient d'avoir une autonomie réduite et donc une portée limitée.

Le document US 2016/0378108A1 divulgue un système collectif de véhicules aériens sans pilote (UAV) dans lequel plusieurs UAV peuvent être couplés ensemble pour former l'UAV collectif. Plutôt que d'utiliser un seul grand UAV pour transporter un article plus grand ou plus lourd, plusieurs UAV plus petits peuvent se coupler pour former un drone collectif utilisé pour transporter l'article plus gros ou plus lourd.

Le document CN205186504U divulgue un drone comprenant un ballon d'hélium et un tube de gaz léger à haute résistance connecté au fond de la surface du ballon d'hélium.

Le document CN206351780U divulgue un porte-avion sans pilote basé sur une station terrestre et un ballon d'hélium, comprenant principalement une partie de la station terrestre, une partie de la boule d'hélium, une partie d'avion sans pilote et un pipeline de raccordement.

Le document US9852644B2 divulgue un drone dirigeable hybride présentant à la fois une portance passive fournie par un ballon à gaz et une portance active fournie par des hélices.

Le document CN107839882A divulgue un avion sans pilote suspendu dans l'air par un dispositif de lévitation. En cas de panne de moteur, les marchandises transportées ne sont pas endommagées.

Le document US10267949B2 divulgue un véhicule de vol comportant un ballon rempli d'un gaz plus léger que l'air couplé de manière permanente un système de propulsion portant une unité d'imagerie prévue enregistrer des images d'intérêt et une unité de commande. L'unité de commande est configurée pour effectuer un mouvement de commande du véhicule de vol sur la base d'au moins une des informations relatives au véhicule de vol et des informations sur l'environnement du véhicule de vol, et pour effectuer une commande pour enregistrer des données d'image générées par l'unité d'imagerie.

Le document US10246186B1 divulgue un véhicule aérien sans pilote (UAV) comprenant une membrane gonflable et une chambre à gaz comprimé contenant un gaz tel que de l'hélium pour gonfler la membrane. Lorsque l'UAV approche ou part d'un endroit où la réduction du bruit est souhaitable (par exemple, un emplacement de livraison), la membrane peut être gonflée de manière à augmenter la flottabilité de l'UAV et permettre au système de propulsion d'être utilisé avec moins de poussée et donc moins de bruit. Une fois que l'UAV est parti et a atteint une certaine distance de l'emplacement, la membrane peut être dégonflée et rétractée dans une zone de stockage de l'UAV.

L'objet de la présente invention est de proposer un concept nouveau de système aérien de transport et de livraison de biens sans pilote, qui offre une autonomie bien plus élevée que celle des drones civils actuels.

### DEFINITIONS

| | | |
|---|---|---|
| *Drone :* | Aéronef motorisé sans pilote humain embarqué | |
| *Ballon ou aérostat :* | Dispositif aérostatique non motorisé | |
| *Portance aérostatique:* | Force opposée au poids de l'air déplacé par un ballon ou aérostat. F = ρ.g.V | |
| | | ρ; masse volumique de l'air déplacé par le ballon [kg/m³] |
| | | V: volume d'air déplacé par le ballon [m³] |
| | | g: accélération de la pesanteur [m/s²] |

### RESUME DE L'INVENTION

Cet objectif est atteint avec un système aérien de transport et de livraison de colis sans pilote humain embarqué selon la revendication 1, le système comprenant :
- au moins un aéronef motorisé sans pilote humain embarqué, tel qu'un drone de propulsion,
- au moins un dispositif aérostatique non motorisé présentant une portance aérostatique et adapté pour être couplé audit au moins un aéronef motorisé,

ledit au moins un aéronef motorisé et ledit au moins un dispositif aérostatique non motorisé coopérant pour transporter au moins un colis depuis un site d'emport vers un site de livraison,
ledit au moins un dispositif aérostatique étant configuré de sorte que sa portance aérostatique soit sensiblement supérieure ou égale au poids global dudit au moins un colis à transporter et dudit dispositif aérostatique.

Le système aérien coopère avec au moins un site de stockage et de distribution de modules aérostatiques présentant chacun une portance aérostatique modulaire prédéterminée, ledit site de stockage et de distribution étant situé à proximité du site d'emport et étant configuré pour délivrer sur demande un ensemble de j modules aérostatiques rendus solidaires par des moyens de couplage, de façon à fournir un dispositif aérostatique constitué à partir desdits j modules aérostatiques et présentant une portance statique sensiblement supérieure ou égale au poids global du colis à transporter et dudit dispositif aérostatique.

Les systèmes aériens de transport de colis n'auront ainsi aucune limitation de vitesse (il suffit d'ajouter des drones de propulsion pour être plus rapide), aucune limitation de portée (il suffit de remplacer les drones lorsque l'énergie est faible), aucune limitation de charge utile (il suffit d'ajouter des ballons pour la portance) et ils sont respectueux de l'environnement, grâce notamment à la réutilisation des dispositifs aérostatiques.

Dans un mode de réalisation, le site de stockage est en outre configuré pour délivrer un ensemble de j modules de façon à fournir un dispositif aérostatique présente une portance statique sensiblement supérieure ou égale au poids global dudit au moins un colis, dudit dispositif aérostatique et dudit au moins un aéronef motorisé.

Dans ce mode de réalisation, l'aéronef motorisé est libéré de la charge de supporter son propre poids et peut ainsi utiliser toute son énergie embarquée pour la propulsion du système aérien.

Le au moins site de stockage et de distribution peut comprendre des moyens pour coupler le dispositif aérostatique résultant des j modules aérostatiques solidarisés, à l'aéronef motorisé.

Le système aérien peut coopérer avec au moins un site de récupération et de stockage de modules aérostatiques, ce site de récupération et de stockage étant situé à proximité du site de livraison et étant configuré pour collecter les j modules aérostatiques préalablement découplés de l'aéronef motorisé.

Le site de récupération et de stockage peut comprendre des moyens pour découpler le dispositif aérostatique de l'aéronef motorisé.

Le système aérien peut en outre comprendre des moyens pour désolidariser les j modules aérostatiques.

Au moins un site de distribution et de stockage peut être configuré pour assurer également les fonctions de récupération et de stockage.

Au moins un site de stockage et de distribution et et/ou au moins un site de récupération et de stockage peut ou peuvent comprendre un silo agencé pour stocker un empilement de modules aérostatiques. Les modules aérostatiques peuvent comprendre une structure porteuse de géométrie toroïdale et remplie d'un gaz plus léger que l'air.

Au moins une structure porteuse peut comprendre des moyens pour recevoir au moins en partie l'aéronef motorisé portant un colis, dans une partie centrale de ladite structure porteuse et des moyens pour coupler ledit aéronef motorisé à ladite structure porteuse.

Au moins une structure porteuse peut comprendre des moyens pour recevoir le au moins un colis dans une partie centrale de ladite structure porteuse.

Au moins une structure porteuse peut comprendre des moyens pour arrimer l'aéronef motorisé au module aérostatique.

Le système aérien peut coopérer avec un site de contrôle et de traitement prévu pour calculer une stratégie de transport adaptée à chaque colis destiné à être transporté depuis un site d'emport vers un site de livraison.

Le site de contrôle et de traitement peut comprendre des moyens pour déterminer, en fonction du poids du colis à livrer et du site d'emport, le nombre de modules aérostatiques à distribuer et le site de stockage et de distribution à utiliser, et des moyens pour contrôler une séquence de couplage de l'aéronef motorisé au dispositif aérostatique sur ledit site de stockage et de distribution.

Le site de contrôle et de traitement peut en outre comprendre des moyens pour déterminer, en fonction d'une vitesse de livraison souhaitée, le nombre d'aéronefs motorisés additionnels à distribuer et à coupler audit système aérien, pour augmenter la vitesse des systèmes aériens et donc accélérer la livraison. Ces aéronefs motorisés additionnels pourraient par exemple être stockés à proximité.

Le site de contrôle et de traitement peut en outre comprendre des moyens pour contrôler une séquence de découplage de l'aéronef motorisé d'avec le dispositif aérostatique sur le site de récupération et de stockage.

Suivant un autre aspect, il est proposé un procédé de transport aérien de colis selon la revendication 17, mis en oeuvre dans un système aérien pour le transport et la livraison d'au moins un colis depuis un site d'emport vers un site de livraison comprenant un couplage d'au moins un aéronef motorisé sans pilote humain embarqué avec au moins un dispositif aérostatique non motorisé présentant une portance aérostatique,
ledit au moins un aéronef motorisé et ledit au moins un dispositif aérostatique non motorisé coopérant pour transporter au moins un colis depuis un site d'emport vers un site de livraison.

Le procédé de transport comprend en outre une séquence de transfert de l'aéronef motorisé vers un site de stockage et de distribution de modules aérostatiques présentant chacun une portance aérostatique modulaire prédéterminée, ledit site de stockage et de distribution étant situé à proximité du site d'emport et étant configuré pour délivrer sur demande un ensemble de j modules aérostatiques rendus solidaires par des moyens de couplage, de façon à fournir un dispositif aérostatique constitué à partir desdits j modules aérostatiques et présentant une portance statique sensiblement supérieure ou égale au poids global du colis à transporter et dudit dispositif aérostatique. Dans un mode particulier de mise en oeuvre du procédé de transport, la séquence de configuration du dispositif aérostatique à partir d'une combinaison de j modules aérostatiques est en outre agencée de sorte que la portance dudit dispositif aérostatique ainsi configuré est sensiblement supérieure ou égale au poids global dudit colis, dudit dispositif aérostatique et dudit au moins un aéronef motorisé.

Lors de la séquence de transfert, l'aéronef motorisé peut porter le colis à livrer. Le colis à livrer peut aussi être préalablement fixé au dispositif aérostatique.

Le procédé de transport peut en outre comprendre une séquence de couplage du dispositif aérostatique avec l'aéronef motorisé, suivie d'une séquence de transport du colis à livrer par l'ensemble couplé [Dispositif aérostatique - Aéronef motorisé].

Le procédé de transport peut en outre comprendre une séquence de découplage de l'aéronef motorisé d'avec le dispositif aérostatique sur un site de récupération et de stockage de modules aérostatiques situé à proximité du site de livraison et configuré pour collecter les j modules aérostatiques.

Ce procédé peut aussi comprendre, à la suite de la séquence de découplage, une séquence de transport du colis par l'aéronef motorisé depuis le site de récupération et de stockage vers le site de livraison. Le colis peut aussi être mis à disposition sur le site de récupération et de stockage.

Le procédé de transport peut en outre comprendre une séquence pour configurer un dispositif aérostatique à partir d'une combinaison de j modules aérostatiques de sorte que la portance dudit dispositif aérostatique ainsi configuré est sensiblement supérieure ou égale au poids global dudit colis et dudit dispositif aérostatique, ainsi qu'une séquence initiale de calcul d'une stratégie de transport adaptée à chaque colis destiné à être transporté depuis un site d'emport vers un site de livraison.

La séquence initiale peut comprendre une étape pour déterminer, en fonction du poids du colis à livrer et du site d'emport, le nombre de modules aérostatiques à distribuer et le site de stockage et de distribution à utiliser, et une étape pour contrôler un couplage de l'aéronef motorisé au dispositif aérostatique sur le site de stockage et de distribution.

Le procédé de transport selon l'invention peut en outre comprendre une étape pour distribuer au moins un aéronef motorisé additionnel et le coupler au système aérien selon l'invention.

On peut prévoir qu'une étape du procédé logistique soit inscrite sur une blockchain de manière à rendre immuables, transparentes et horodatées les données de ladite étape.

Suivant encore un autre aspect, il est proposé un dispositif aérostatique non motorisé mis en oeuvre dans un système aérien de transport et de livraison de colis sans pilote humain embarqué, adapté pour être couplé à au moins un aéronef motorisé sans pilote humain embarqué et pour coopérer avec ledit aéronef motorisé pour transporter au moins un colis depuis un site d'emport vers un site de livraison, ledit au moins un dispositif aérostatique étant configuré de sorte que sa portance aérostatique soit sensiblement supérieure ou égale au poids cumulé dudit au moins un colis à transporter et dudit dispositif aérostatique.

Ce dispositif aérostatique peut être avantageusement réalisé à partir d'un ensemble de modules aérostatiques présentant chacun une portance aérostatique modulaire prédéterminée, de façon à obtenir une portance statique sensiblement supérieure ou égale au poids cumulé du colis à transporter, dudit dispositif aérostatique et de l'au moins un aéronef motorisé.

Les modules aérostatiques constituant le dispositif aérostatique peuvent être avantageusement agencés pour réaliser un conteneur prévu pour y recevoir un ou plusieurs colis.

### DESCRIPTION DES FIGURES

On comprendra mieux l'invention à la lumière des figures ci-dessous :
- La figure 1 est un schéma synoptique d'un exemple d'opération d'un système aérien de transport selon l'invention ;
- La figure 2 illustre un ensemble de configurations possibles de systèmes aériens selon l'invention combinant un ou plusieurs aéronefs motorisés Dₖ et un ou plusieurs dispositifs aérostatiques Bⱼ, pour le transport d'un ou plusieurs colis P; ;
- La figure 3 illustre un premier exemple de réalisation d'un système aérien de transport selon l'invention dans lequel l'aéronef motorisé est arrimé à l'intérieur du dispositif aérostatique, dans une configuration P₁B₂D₁ ;
- La figure 4 illustre une configuration P₀B₁D₁ du système aérien selon l'invention, dans laquelle l'aéronef motorisé se couple au dispositif aérostatique sans emport de colis ;
- La figure 5 illustre un second exemple de réalisation d'un système aérien de transport selon l'invention dans lequel l'aéronef motorisé tracte le dispositif aérostatique portant un colis, dans une configuration P₁B₂D₁ ;
- La figure 6 illustre plusieurs configurations possibles d'un système aérien selon l'invention, pour transporter et livrer un ensemble de colis ; et
- La figure 7 illustre un exemple pratique de mise en oeuvre d'un système aérien selon l'invention, pour une livraison aérienne de plusieurs colis sur une longue distance.

### DESCRIPTION DETAILLEE D'EXEMPLES DE REALISATION

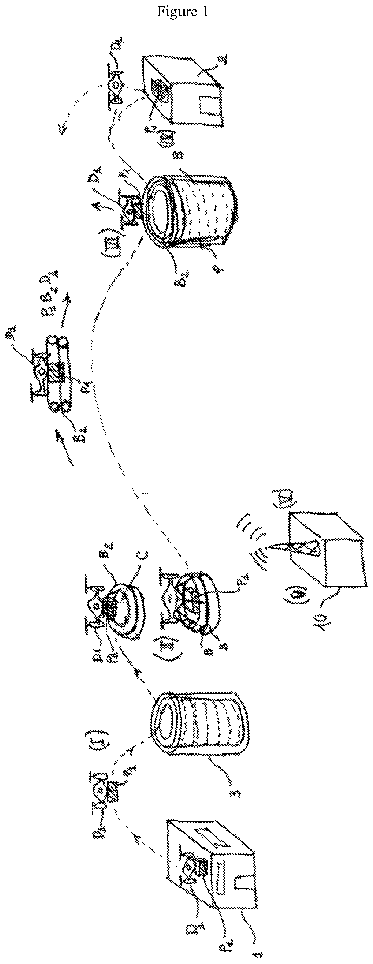

En référence à la figure 1, un système aérien de transport et de livraison de colis sans pilote humain embarqué selon l'invention P₁B₂D₁ est constitué d'un drone D₁ en tant qu'aéronef motorisé sans pilote humain embarqué, d'un ensemble de deux modules gonflables B solidarisés et remplis d'hélium en tant que dispositif aérostatique non motorisé B₂, et d'un colis P₁ à livrer depuis un site d'emport 1 à destination d'un site de livraison 2.

Le drone D₁ peut par exemple être un quadricoptère et les deux modules B remplis d'hélium peuvent avoir la forme de tores pourvus d'un évidement central adapté pour recevoir un ou plusieurs colis et un système d'arrimage commandé du drone D₁.

Un site 10 de contrôle et de traitement est dédié à la gestion d'une flotte de systèmes aériens selon l'invention. Ce site est en particulier chargé de définir pour un colis ou ensemble de colis une stratégie de transport et de livraison. Il va notamment déterminer le nombre de modules aérostatiques nécessaires pour compenser le poids d'un ou des colis par leur portance aérostatique cumulée égale à la somme des portances aérostatiques modulaires de ces modules aérostatiques.

On va maintenant décrire, toujours en référence à la figure 1, un exemple pratique de mise en oeuvre du procédé de transport et de livraison de colis selon l'invention.

Après une séquence initiale (0) de définition d'une stratégie adaptée à la demande de livraison d'un colis, élaborée sur le site de contrôle et de traitement (10), un drone D₁ est piloté pour prendre en charge un colis P₁ sur le site d'emport 1. Ce pilotage peut être réalisé soit par un opérateur humain, soit en mode automatique. L'arrimage du colis P₁ au drone D₁ peut être réalisé par des moyens mécaniques commandés connus et disponibles.

Le drone D₁ portant le colis P₁ est ensuite piloté (séquence I) pour rejoindre un site 3 de stockage et de distribution de modules aérostatiques. Ce site 3 comporte par exemple un cylindre distributeur rempli de modules aérostatiques préalablement gonflés d'un gaz plus léger que l'air tel que de l'hélium et présentant une géométrie de type torique fermée ou ouverte. Lorsque le drone D₁ approche la partie supérieure du cylindre distributeur, il est alors piloté pour venir se coupler mécaniquement (séquence II) à deux modules aérostatiques qui sont alors libérés du cylindre distributeur et mécaniquement solidarisés. La portance statique cumulée des deux modules B₂, égale à la somme de leurs portances aérostatiques modulaires, est nécessairement supérieure ou égale au poids cumulé du colis P₁ et de ces deux modules.

Le système aérien P₁B₂D₁ ainsi constitué est alors piloté pour effectuer un trajet contrôlé vers le site de livraison 2. Lors de ce trajet, le drone est déchargé en grande partie des efforts de compensation du poids du colis qui sont désormais neutralisés par la portance statique cumulée des deux modules aérostatiques B₂ et son énergie est désormais principalement mobilisée pour la composante horizontale du vol et pour les dynamiques de vol vers le site de livraison 2. A titre d'exemple pratique, le drone ainsi couplé aux modules aérostatiques présente une portée de 50 km avec une vitesse de 5 km/heure, soit 5 fois plus que la portée d'un drone seul à même vitesse.

Lorsque le système aérien P₁B₂D₁ arrive au-dessus de la partie supérieure d'un site 4 de récupération et de stockage situé à proximité du site de livraison 2, il est alors piloté pour interagir (séquence III) avec des moyens de découplage (non représentés) qui ont pour fonction de découpler le drone D₁ d'avec les deux modules aérostatiques B₂ qui sont alors récupérés dans un cylindre collecteur au sein du site de récupération et de stockage 4. Le drone D₁ portant le colis P₁ est finalement piloté pour rejoindre le site de livraison 2 et le colis P₁ est alors désarrimé (séquence IV) du drone D₁ qui peut ensuite reprendre d'autres missions.

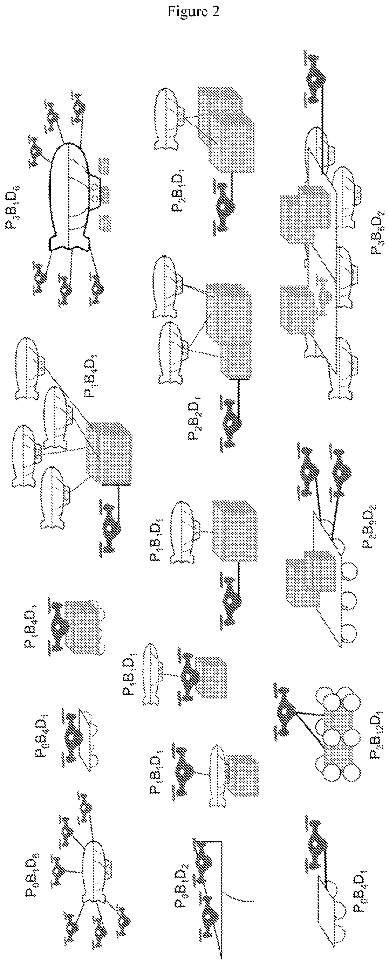

En référence à la figure 2, de nombreuses configurations colis-aérostats-drones PᵢBⱼDₖ peuvent être envisagées dans le cadre de la présente invention. Ces configurations sont par exemple :

| | |
|---|---|
| - P₁B₄D₁ | quatre aérostats supportent un colis et un drone propulseur |
| | quatre aérostats soulèvent un colis qui est tracté par un drone |
| - P₃B₁D₆ | un aérostat porte trois colis et est tracté par six drones |
| - P₁B₁D₁ | un aérostat porte un colis et un drone soulève cet ensemble |
| | un aérostat porte un drone portant un colis |
| | un drone tracte un colis porté par un aérostat |
| - P₂B₂D₁ | deux aérostats portent collectivement deux colis solidarisés qui sont tractés par un drone |
| - P₂B₁D₁ | un aérostat porte deux colis solidarisés qui sont tractés par un drone |
| - P₂B₁₂D₁ | deux colis solidarisés sont couplés à douze modules aérostatiques sphériques et tractés par un drone |
| - P₂B₉D₂ | deux colis sont portés sur une base par un ensemble de neuf aérostats sphériques, la base étant tractée par deux drones |
| - P₃B₆D₂ | trois colis sont portés sur une base supportée par six aérostats et tractés par deux drones dont l'un est temporairement actif |

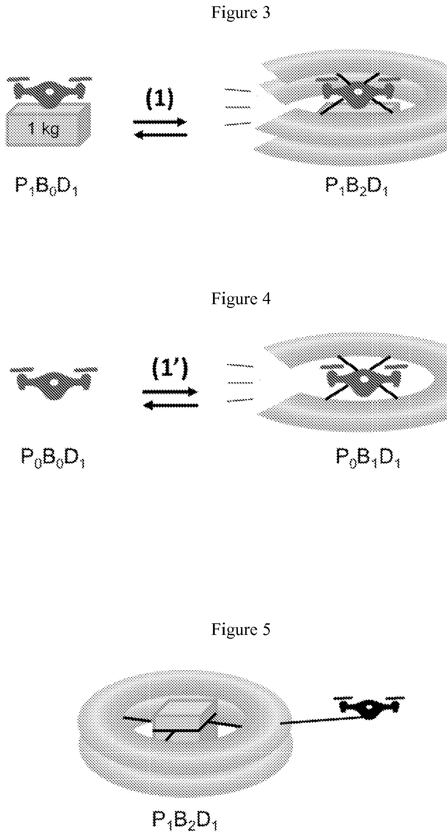

En référence à la figure 3, un système aérien P₁B₂D₁ selon l'invention comprend un drone D₁ portant un colis P₁, par exemple d'un poids de 1 kg. Il est couplé (1) à deux modules aérostatiques non motorisés B₂ qui ont ici une forme de fer à cheval. Un système d'arrimage permet de solidariser le drone D₁ et les deux modules aérostatiques B₂.

Si la masse à vide de ces deux modules est par exemple de 100 g, la portance aérostatique cumulée des deux modules aérostatiques, égale à la somme de leurs portances aérostatiques modulaires, doit compenser un poids de 1.1 kg, ce qui implique que le volume cumulé des deux modules aérostatiques doit être supérieur ou égal à 1.1 m³.

On peut aussi prévoir un système aérien selon l'invention dans une configuration à vide (sans colis) P₀B₁D₁, comme l'illustre la figure 4. Dans ce cas, le couplage (1') du drone D₁ au module aérostatique B₁ du même type que celui de la figure 3 conduit à procurer à ce drone un allégement correspondant à une poussée équivalente de 0.55 kg, ce qui va permettre une augmentation de la portée opérationnelle de ce drone.

Comme exposé précédemment en référence à la figure 2, il existe de nombreuses configurations de couplage entre le ou les drones et le ou les modules aérostatiques, comme l'illustre la figure 5. Dans cette configuration P₁B₂D₁, le drone D₁ tracte un dispositif aérostatique B₂ constitué de deux modules aérostatiques dans l'évidement central duquel un colis P₁ a été disposé et fixé.

Le procédé de transport et de livraison de colis selon la divulgation présente un haut niveau d'adaptabilité aux besoins de livraison du fait du caractère modulaire des différentes composantes du système aérien.

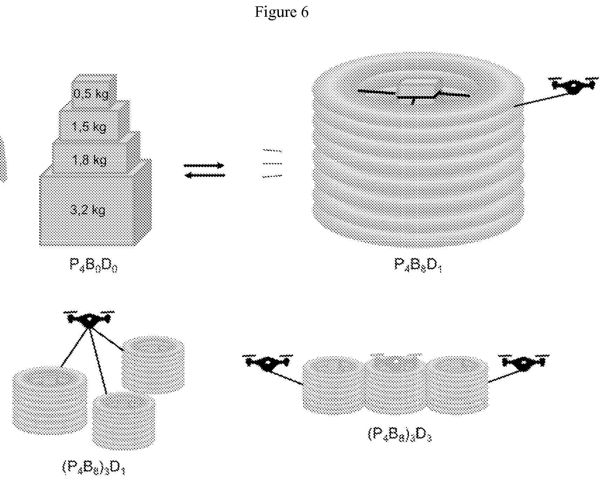

Ainsi, en référence à la figure 6, si on considère un objectif de livraison d'un lot P₄ de quatre colis ayant des poids respectifs de 0.5 kg, 1.5 kg, 1.8 kg et 3.2 kg, le site de contrôle et de traitement détermine le nombre de modules aérostatiques qu'il va falloir mobiliser dans le site de stockage et de distribution pour compenser, par la somme de leurs portances aérostatiques modulaires, un poids total de 7 kg.

Si chaque module torique présente un volume de 1 m³ et un poids de 0.1 kg, il faudrait au moins huit modules pour compenser le poids cumulé du lot de colis, par exemple sous la forme d'un empilement (configuration P₄B₈D₁). Il est également possible de combiner des structures aériennes pour plus d'efficacité dans le processus de livraison.

Si on a 4 colis à transporter, la structure P₄B₈D₁ est la mieux adaptée. Le drone n'a plus qu'à utiliser son énergie pour déplacer l'ensemble dans l'espace aérien sans s'occuper du poids, d'où un gain d'énergie et la possibilité d'atteindre de plus longues distances (ici on estime que la portée est multipliée par 5). La vitesse reste inchangée.

Toutefois, si on a 3 fois la même situation (4 colis fois 3 à livrer), au lieu d'utiliser trois structures P₄B₈D₁ indépendantes, on va les rassembler, et donc économiser 2 drones de propulsion. D'où la structure (P₄B₈)₃D₁ dans laquelle les éléments sont libres.

Pour une meilleure aérodynamique du système aérien et une plus grande rapidité de livraison, on peut aussi solidariser les éléments et augmenter le nombre de drones, ici 3 dont 1 qui sera temporairement actif (celui en gris), ce qui correspond à la structure (P₄B₈)₃D₃.

On peut également envisager d'autres configurations mettant en oeuvre d'autres types de modules aérostatiques présentant par exemple des volumes plus petits, et donc des portances plus faibles.

Un autre avantage procuré par l'utilisation d'anneaux toriques comme modules aérostatiques est qu'ils peuvent servir d'airbags et de protection des colis contre les chocs mais aussi vis-à-vis des espèces vivantes (oiseaux, humains, etc.). L'ensemble peut atterrir et redécoller tel quel dans des zones habitées.

Les systèmes aériens de livraison de colis selon l'invention sont particulièrement adaptés pour des livraisons à moyenne distance en mode B2C (Business to Consumer) et peuvent contribuer à augmenter la portée d'une flotte de drones existante.

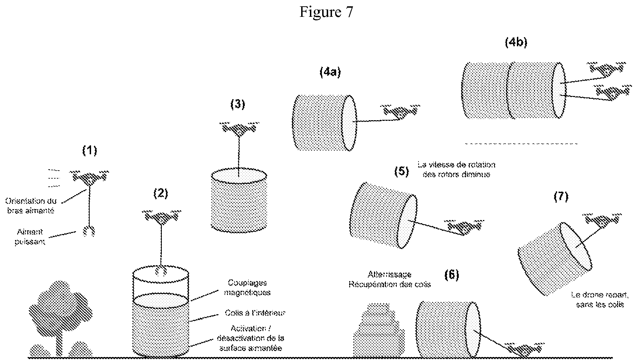

On va maintenant décrire, en référence à la figure 7, un exemple pratique de mise en oeuvre d'un système aérien selon l'invention pour une livraison aérienne longue distance multi-colis. On considère (1) un drone propulseur équipé d'un bras aimanté orientable pourvu à son extrémité distale d'un aimant ou d'un électro-aimant commandé. Ce drone arrive en approche (2) d'un dispositif aérostatique préalablement configuré pour comporter un ensemble de modules aérostatiques couplés magnétiquement entre eux de façon à réaliser un conteneur cylindrique aérostatique à l'intérieur duquel des colis ont été disposés. Le drone se couple magnétiquement sur une surface supérieure en matériau ferromagnétique du conteneur aérostatique au moyen de son bras aimanté.

Le nombre de modules aérostatiques constituant ce dispositif aérostatique a été préalablement déterminé afin de présenter une portance aérostatique cumulée, équilibrant au minimum le poids global des colis transportés et du dispositif aérostatique. On peut aussi prévoir un nombre de modules aérostatiques conduisant à une portance aérostatique cumulée supérieure qui équilibre le poids cumulé du dispositif aérostatique, des colis et du drone.

Le drone s'envole et tracte (3) le dispositif aérostatique contenant les colis, ce dispositif aérostatique pouvant alors être sensiblement à même altitude (4a) que le drone tracteur. On peut aussi prévoir (4b) une combinaison de deux dispositifs aérostatiques couplés et tractés par deux drones.

A l'approche du site de livraison, le drone tractant le dispositif aérostatique amorce une descente (5) jusqu'à atterrir et déposer (6) le dispositif aérostatique sur le sol. Le dispositif aérostatique est alors fixé au sol et sécurisé, puis les colis sont extraits de l'intérieur du dispositif aérostatique. Le drone peut alors repartir (7) en tractant le dispositif aérostatique sans les colis. Un lest peut être prévu afin de rééquilibrer le dispositif aérostatique.

Dans un mode spécifique de mise en oeuvre de l'invention, on peut prévoir un drone initial qui devient inactif (ou temporairement actif) dès lors qu'il est couplé à un dispositif aérostatique non motorisé. Un ou plusieurs drones propulseurs viennent se fixer à l'ensemble et s'occupent de la propulsion dans l'espace aérien d'où la possibilité d'atteindre de plus longues distances et des vitesses supérieures (il suffit de rajouter des propulseurs).

Quand un drone propulseur n'a plus d'énergie, il est remplacé par un nouveau ce qui permettrait d'atteindre des distances théoriquement illimitées.

Un autre mode d'exploitation concerne des livraisons longue distance B2B (Business to business) rapides, par exemple, pour des opérations logistiques entre deux entrepôts espacés par la mer.

On va maintenant décrire des exemples non limitatifs de couplage d'un dispositif aérostatique réalisé à partir d'un ensemble de modules aérostatiques B, d'un drone propulseur D et de colis P, dans le cadre de la présente invention.

Les couplages entre les différents éléments P,B,D peuvent être de différentes natures :P-P,B-B,P-B,BD,D-P et D-D.

Ces couplages sont de type temporaire et réversible et mettent par exemple en oeuvre des liaisons mécaniques, électriques, électrostatiques, électromagnétiques, magnétiques, chimiques ou auto-agrippantes (par exemple du type Velcro^{®}). Une ou plusieurs pièces de couplage intermédiaires peuvent aussi être prévues dans le contexte de la présente invention.

On peut aussi prévoir des combinaisons de plusieurs types de couplage dans un même système aérien selon l'invention. Ainsi, en référence à la configuration (P₄B₈)₃D₁ représentée en figure 6, le système aérien peut mettre en oeuvre un couplage magnétique entre les colis (P-P), un couplage magnétique entre les ballons (B-B), un couplage magnétique entre le(s) colis et le dispositif aérostatique (P-B) et un couplage mécanique entre les ballons et le drone (B-D).

D'une manière plus générale et dans une approche bio-inspirée, les systèmes aériens selon l'invention peuvent être assimilés à des molécules chimiques et les couplages entre les différents composants de ces systèmes aériens peuvent alors être assimilés à des « liaisons chimiques » qui peuvent donc être simple, double ou triple, ce qui correspondrait à des niveaux variables de couplage. Par exemple, si on considère une liaison mécanique par câble entre un drone propulseur D et un dispositif aérostatique B, on peut prévoir :
- un premier niveau de couplage D-B correspondant à une utilisation d'un seul câble,
- un deuxième niveau de couplage D = B correspondant à une utilisation de deux câbles,
- un troisième niveau de couplage D ≡ B correspondant à une utilisation de trois câbles.

Bien sûr l'invention n'est pas limitée à l'exemple de réalisation qui vient d'être décrit et bien d'autres modes de réalisation peuvent être envisagés sans sortir du cadre de la présente invention. Ainsi, le gaz porteur présent dans les modules aérostatiques peut être de l'hélium ou de l'hydrogène ou bien une combinaison de ces deux gaz. La géométrie des modules peut être variable et adaptée à des structures spécifiques de colis ou de drones. Des modules aérostatiques toriques peuvent être en forme d'anneau fermé ou bien en forme de fer à cheval. La section des tores peut être quelconque et dépendre notamment des modes de distribution et/ou de récupération de ces modules. Ces modules aérostatiques peuvent avoir une structure rigide, semi-rigide ou souple telle qu'un pneumatique.

Les aéronefs motorisés sans pilote humain embarqué, tels que des drones, peuvent présenter divers modes de propulsion, notamment électrique, thermique ou hybride, avec différentes sources d'énergie telles que le solaire ou l'hydrogène.

Il est à noter que les colis au sein des systèmes aériens n'ont pas de limitation en termes de contenant ou de contenu. Le contenant peut être du carton, du tissu, du plastique, des métaux ou alliages, des fibres naturelles, des polymères, des matières recyclées, de la fibre de carbone, du graphène, des matériaux isothermes, ou tout autre matériau, peu importe sa forme.

Le contenu regroupe n'importe quel type d'objets ou produits manufacturés, de machines (imprimantes 3D, instruments scientifiques, etc.), de systèmes informatiques (smartphones, modules avec une antenne 4G ou 5G, caméras haute résolution, etc.), de denrées alimentaires (pizzas, plats cuisinés, etc.), de fluides (eau, gaz carbonique, etc.), de composés chimiques et électrochimiques (médicaments, batteries pour véhicules électriques, etc.) ou de systèmes vivants et biologiques (organes, sang, animaux, plantes, êtres humains).

Les sites de stockage et de distribution de modules aérostatiques, de même que les sites de récupération et de stockage de ces modules, peuvent être disposés sur un support fixe ou mobile, dans un lieu couvert ou à l'extérieur, sur terre, sur l'eau, ou dans les airs.

## Revendications

1. Système aérien de transport et de livraison de colis sans pilote humain embarqué (PᵢBⱼDₖ), comprenant :
- au moins un aéronef motorisé sans pilote humain embarqué (Dₖ),
- au moins un dispositif aérostatique non motorisé (Bⱼ) présentant une portance aérostatique et adapté pour être couplé audit au moins un aéronef motorisé,
ledit au moins un aéronef motorisé et ledit au moins un dispositif aérostatique non motorisé coopérant pour transporter au moins un colis (Pᵢ) depuis un site d'emport (1) vers un site de livraison (2),
**caractérisé en ce que** ledit au moins un dispositif aérostatique (Bⱼ) (i) est constitué à partir de j modules aérostatiques présentant chacun une portance aérostatique modulaire prédéterminée et rendus solidaires entre eux par des moyens de couplage, de sorte que ledit au moins un dispositif aérostatique (Bⱼ) présente une portance statique sensiblement supérieure ou égale au poids global du colis (Pi) à transporter et dudit dispositif aérostatique (Bⱼ),
lesdits j modules aérostatiques étant adaptés pour être délivrés sur demande par un site (3) de stockage et de distribution de modules aérostatiques (B), ledit site de stockage et de distribution (3) étant situé à proximité du site d'emport (1).

2. Système aérien selon la revendication 1, **caractérisé en ce que** le au moins un site de stockage et de distribution est en outre configuré pour délivrer un ensemble de j modules de façon à fournir un dispositif aérostatique présentant une portance statique sensiblement supérieure ou égale au poids global dudit au moins un colis, dudit dispositif aérostatique et dudit au moins un aéronef motorisé.

3. Système aérien (PᵢBⱼDₖ) selon l'une des revendications précédentes, **caractérisé en ce que** le au moins un site de stockage et de distribution (3) comprend des moyens (30) pour coupler le dispositif aérostatique (Bⱼ) résultant des j modules aérostatiques (B) solidarisés, à l'aéronef motorisé (Dₖ).

4. Système aérien (PᵢBⱼDₖ) selon l'une des revendications précédentes, **caractérisé en ce qu'**il coopère avec au moins un site (4) de récupération et de stockage de modules aérostatiques (B), ledit site de récupération et de stockage (4) étant situé à proximité du site de livraison (2) et étant configuré pour collecter les j modules aérostatiques (B) préalablement découplés de l'aéronef motorisé (Dₖ).

5. Système aérien (PᵢBⱼDₖ) selon la revendication précédente, **caractérisé en ce que** le au moins un site de récupération et de stockage (4) comprend des moyens (40) pour découpler le dispositif aérostatique (Bⱼ) de l'aéronef motorisé (Dₖ).

6. Système aérien (PᵢBⱼDₖ) selon l'une quelconque des revendications précédentes, **caractérisé en ce qu'**il comprend en outre des moyens (41) pour désolidariser les j modules aérostatiques (B).

7. Système aérien (PᵢBⱼDₖ) selon l'une quelconque des revendications précédentes, **caractérisé en ce qu'**au moins un site de distribution et de stockage est configuré pour assurer également les fonctions de récupération et de stockage.

8. Système aérien (PᵢBⱼDₖ) selon l'une quelconque des revendications précédentes, **caractérisé en ce qu'**au moins un site de stockage et de distribution (3)et et/ou au moins un site de récupération et de stockage (4) comprend un silo (5) agencé pour stocker un empilement de modules aérostatiques (B).

9. Système aérien (PᵢBⱼDₖ) selon l'une quelconque des revendications précédentes, **caractérisé en ce que** les modules aérostatiques (B) comprennent une structure porteuse (S) de géométrie toroïdale fermée ou ouverte et remplie d'un gaz plus léger que l'air.

10. Système aérien (PᵢBⱼDₖ) selon la revendication précédente, **caractérisé en ce qu'**au moins une structure porteuse (S) comprend des moyens pour recevoir au moins en partie l'aéronef motorisé (Dₖ) portant un colis (Pᵢ), dans une partie centrale (C) de ladite structure porteuse et des moyens pour coupler ledit aéronef motorisé (Dₖ) à ladite structure porteuse.

11. Système aérien (PᵢBⱼDₖ) selon l'une des revendications 9 ou 10, **caractérisé en ce qu'**au moins une structure porteuse (S) comprend des moyens pour recevoir le au moins un colis (Pᵢ) dans une partie centrale (C) de ladite structure porteuse.

12. Système aérien (PᵢBⱼDₖ) selon la revendication précédente, **caractérisé en ce qu'**au moins une structure porteuse (S) comprend des moyens pour arrimer l'aéronef motorisé (Dₖ) au module aérostatique (B).

13. Système aérien (PᵢBⱼDₖ) selon l'une quelconque des revendications précédentes, **caractérisé en ce qu'**il coopère avec un site (10) de contrôle et de traitement prévu pour calculer une stratégie de transport adaptée à chaque colis (Pᵢ) destiné à être transporté depuis un site d'emport (1) vers un site de livraison (2).

14. Système aérien (PᵢBⱼDₖ) selon la revendication précédente, **caractérisé en ce que** le site de contrôle et de traitement (10) comprend des moyens pour déterminer, en fonction du poids du colis (Pᵢ) à livrer et du site d'emport (1), le nombre de modules aérostatiques (B) à distribuer et le site de stockage et de distribution (3) à utiliser, et des moyens pour contrôler une séquence de couplage de l'aéronef motorisé (Dₖ) au dispositif aérostatique (Bⱼ) sur ledit site de stockage et de distribution (3).

15. Système aérien (PᵢBⱼDₖ) selon l'une des revendications 13 ou 14, **caractérisé en ce que** le site de contrôle et de traitement (10) peut en outre comprendre des moyens pour déterminer, en fonction d'une vitesse de livraison souhaitée, le nombre d'aéronefs motorisés additionnels à distribuer.

16. Système aérien (PᵢBⱼDₖ) selon l'une des revendications 13 à 15, **caractérisé en ce que** le site de contrôle et de traitement (10) comprend en outre des moyens pour contrôler une séquence de découplage de l'aéronef motorisé (Dₖ) d'avec le dispositif aérostatique (Bⱼ) sur le site de récupération et de stockage (4).

17. Procédé de transport aérien de colis, mis en oeuvre dans un système aérien (PᵢBⱼDₖ) selon l'une quelconque des revendications précédentes pour le transport et la livraison d'au moins un colis depuis un site d'emport (1) vers un site de livraison (2) comprenant un couplage d'au moins un aéronef motorisé sans pilote humain embarqué (Dₖ) avec au moins un dispositif aérostatique non motorisé (Bⱼ) présentant une portance aérostatique, ledit au moins un aéronef motorisé et ledit au moins un dispositif aérostatique non motorisé coopérant pour transporter au moins un colis (Pᵢ) depuis un site d'emport (1) vers un site de livraison (2),
**caractérisé en ce qu'**il comprend en outre une séquence (I) de transfert de l'aéronef motorisé (Dₖ) vers un site (3) de stockage et de distribution de modules aérostatiques (B) présentant chacun une portance aérostatique modulaire prédéterminée, ledit site de stockage et de distribution (3) étant situé à proximité du site d'emport (1) et étant configuré pour délivrer sur demande un ensemble de j modules aérostatiques rendus solidaires par des moyens de couplage, de façon à fournir un dispositif aérostatique (Bⱼ) constitué à partir desdits j modules aérostatiques et présentant une portance statique sensiblement supérieure ou égale au poids global du colis (Pᵢ) à transporter et dudit dispositif aérostatique (Bⱼ).

18. Procédé de transport selon la revendication 17, **caractérisé en ce que** lors de la séquence de transfert (I), l'aéronef motorisé (Dₖ) porte le colis (Pᵢ) à livrer.

19. Procédé de transport selon la revendication 17, **caractérisé en ce que** le colis à livrer (Pᵢ) est préalablement fixé au dispositif aérostatique (Bⱼ).

20. Procédé de transport selon l'une des revendications 17 à 19, **caractérisé en ce qu'**il comprend en outre une séquence (II) de couplage du dispositif aérostatique (Bⱼ) avec l'aéronef motorisé (Dₖ), suivie d'une séquence de transport du colis (Pᵢ) à livrer par l'ensemble couplé constitué par le dispositif aérostatique (Bⱼ) et l'aéronef motorisé (Dₖ).

21. Procédé de transport selon la revendication précédente, **caractérisé en ce qu'**il comprend en outre une séquence (III) de découplage de l'aéronef motorisé (Dₖ) d'avec le dispositif aérostatique (Bⱼ) sur un site (4) de récupération et de stockage de modules aérostatiques (B) situé à proximité du site de livraison (2) et configuré pour collecter les j modules aérostatiques (B).

22. Procédé de transport selon la revendication précédente, **caractérisé en ce qu'**il comprend en outre, à la suite de la séquence de découplage, une séquence de transport du colis (Pᵢ) par l'aéronef motorisé (Dₖ) depuis le site de récupération et de stockage (4) vers le site de livraison (2).

23. Procédé de transport selon l'une quelconque des revendications 17 à 22, **caractérisé en ce qu'**il comprend en outre une séquence (V) pour configurer un dispositif aérostatique (Bⱼ) à partir d'une combinaison de j modules aérostatiques (B) de sorte que la portance dudit dispositif aérostatique (Bⱼ) ainsi configuré est sensiblement supérieure ou égale au poids global dudit colis (Pᵢ) et dudit dispositif aérostatique (Bⱼ).

24. Procédé de transport selon la revendication 23, **caractérisé en ce que** la séquence (V) de configuration du dispositif aérostatique (Bⱼ) à partir d'une combinaison de j modules aérostatiques (B) est en outre agencée de sorte que la portance dudit dispositif aérostatique (Bⱼ) ainsi configuré est sensiblement supérieure ou égale au poids global dudit colis (Pᵢ), dudit dispositif aérostatique (Bⱼ) et dudit au moins un aéronef motorisé (Dₖ).

25. Procédé de transport selon l'une quelconque des revendications 17 à 24, **caractérisé en ce qu'**il comprend en outre une séquence initiale (0) de calcul d'une stratégie de transport adaptée à chaque colis (Pᵢ) destiné à être transporté depuis un site d'emport (1) vers un site de livraison (2).

26. Procédé de transport selon la revendication 25, **caractérisé en ce que** la séquence initiale (0) comprend une étape pour déterminer, en fonction du poids du colis (Pᵢ) à livrer et du site d'emport (1), le nombre de modules aérostatiques (B) à distribuer et le site de stockage et de distribution (3) à utiliser, et une étape pour contrôler un couplage de l'aéronef motorisé (Dₖ) au dispositif aérostatique (Bⱼ) sur le site de stockage et de distribution (3).

27. Procédé de transport selon l'une quelconque des revendications 17 à 26, **caractérisé en ce qu'**il comprend en outre une étape pour distribuer au moins un aéronef motorisé additionnel et le coupler au système aérien.

28. Procédé de transport selon l'une quelconque des revendications 17 à 27, dans lequel au moins une étape dudit procédé est inscrite sur une blockchain de manière à rendre immuables, transparentes et horodatées les données de ladite étape.

29. Dispositif aérostatique (Bⱼ) non motorisé mis en oeuvre dans un système aérien de transport et de livraison de colis sans pilote humain embarqué (PᵢBⱼDₖ) selon l'une quelconque des revendications 1 à 16, adapté pour être couplé à au moins un aéronef motorisé sans pilote humain embarqué (Dₖ) et pour coopérer avec ledit aéronef motorisé pour transporter au moins un colis (Pᵢ) depuis un site d'emport (1) vers un site de livraison (2), ledit au moins un dispositif aérostatique (Bⱼ) étant configuré de sorte que sa portance aérostatique soit sensiblement supérieure ou égale au poids global dudit au moins un colis à transporter (Pᵢ) et dudit dispositif aérostatique (Bⱼ),
**caractérisé en ce qu'**il est réalisé à partir d'un ensemble de modules aérostatiques (B) présentant chacun une portance aérostatique modulaire prédéterminée, le nombre de modules aérostatiques étant déterminé de façon à obtenir une portance statique sensiblement supérieure ou égale au poids cumulé du colis (Pᵢ) à transporter et dudit dispositif aérostatique (Bⱼ).

30. Dispositif aérostatique selon la revendication 29, **caractérisé en ce que** le nombre de modules aérostatiques est déterminé de façon à obtenir une portance statique sensiblement supérieure ou égale au poids cumulé du colis (Pᵢ) à transporter, dudit dispositif aérostatique (Bⱼ) et dudit aéronef motorisé.

31. Dispositif aérostatique selon l'une des revendications 29 ou 30, **caractérisé en ce que** les modules aérostatiques le constituant sont agencés pour réaliser un conteneur prévu pour y recevoir un ou plusieurs colis.

## Patentansprüche

1. Lufttransport- und Paketzustellungssystem ohne menschlichen Piloten an Bord (PᵢBⱼDₖ), bestehend aus:
- mindestens einem motorisierten Luftfahrzeug ohne menschlichen Piloten an Bord (Dₖ),
- mindestens einer nicht motorisierten aerostatischen Vorrichtung (Bⱼ), die einen aerostatischen Auftrieb aufweist und so beschaffen ist, dass sie mit mindestens einem motorisierten Luftfahrzeug gekoppelt werden kann,
wobei das mindestens eine motorisierte Luftfahrzeug und die mindestens eine nicht motorisierte aerostatische Vorrichtung zusammenwirken, um mindestens ein Paket (Pᵢ) von einem Mitnahmeort (1) zu einem Lieferort (2) zu transportieren,
**dadurch gekennzeichnet, dass** die mindestens eine aerostatische Vorrichtung (Bⱼ) (i) aus j aerostatischen Modulen gebildet wird, die jeweils einen vorbestimmten modularen aerostatischen Auftrieb aufweisen und durch Kopplungsmittel fest miteinander verbunden werden, so dass die mindestens eine aerostatische Vorrichtung (Bⱼ) einen statischen Auftrieb aufweist, der im Wesentlichen größer oder gleich dem Gesamtgewicht des zu transportierenden Pakets (Pᵢ) und der aerostatischen Vorrichtung (Bⱼ) ist, wobei die j aerostatischen Module dazu geeignet sind, auf Anfrage von einer Lager- und Verteilungsstelle (3) für aerostatische Module (B) ausgegeben zu werden, wobei sich die Lager- und Verteilungsstelle (3) in der Nähe der Mitnahmestelle (1) befindet.

2. Luftsystem nach Anspruch 1, **dadurch gekennzeichnet, dass** die mindestens eine Lager- und Verteilungsstelle ferner so konfiguriert ist, dass sie eine Gruppe von j Modulen ausgibt, um eine aerostatische Vorrichtung bereitzustellen, die einen statischen Auftrieb aufweist, der im Wesentlichen größer oder gleich dem Gesamtgewicht des mindestens einen Pakets, der aerostatischen Vorrichtung und des mindestens einen motorisierten Luftfahrzeugs ist.

3. Luftsystem (PᵢBⱼDₖ) nach einem der vorhergehenden Ansprüche, **dadurch gekennzeichnet, dass** der mindestens eine Lager- und Verteilungsort (3) Mittel (30) umfasst, um die aerostatische Vorrichtung (Bⱼ), die aus den j fest verbundenen aerostatischen Modulen (B) resultiert, an das motorisierte Luftfahrzeug (Dₖ) zu koppeln.

4. Luftsystem (PᵢBⱼDₖ) nach einem der vorhergehenden Ansprüche, **dadurch gekennzeichnet, dass** es mit mindestens einem Ort (4) zur Rückgewinnung und Lagerung von aerostatischen Modulen (B) zusammenwirkt, wobei sich der Ort (4) zur Rückgewinnung und Lagerung in der Nähe des Lieferorts (2) befindet und so konfiguriert ist, dass er die j aerostatischen Module (B) sammelt, die zuvor von dem motorisierten Luftfahrzeug (Dₖ) abgekoppelt wurden.

5. Flugsystem (PᵢBⱼDₖ) nach dem vorhergehenden Anspruch,
**dadurch gekennzeichnet, dass** der mindestens eine Rückgewinnungs- und Lagerort (4) Mittel (40) zum Entkoppeln der aerostatischen Vorrichtung (Bⱼ) vom motorisierten Luftfahrzeug (Dₖ) umfasst.

6. Luftsystem (PᵢBⱼDₖ) nach einem der vorhergehenden Ansprüche,
**dadurch gekennzeichnet, dass** es außerdem Mittel (41) zum Entkoppeln der j aerostatischen Module (B) umfasst.

7. Luftsystem (PᵢBⱼDₖ) nach einem der vorhergehenden Ansprüche,
**dadurch gekennzeichnet, dass** mindestens ein Verteilungs- und Lagerungsort so konfiguriert ist, dass er auch die Funktionen der Rückgewinnung und der Lagerung übernimmt.

8. Luftsystem (PᵢBⱼDₖ) nach einem der vorhergehenden Ansprüche,
**dadurch gekennzeichnet, dass** mindestens ein Lager- und Verteilungsort (3) und/oder mindestens ein Rückgewinnungs- und Lagerort (4) ein Silo (5) umfasst, das so angeordnet ist, dass es einen Stapel von aerostatischen Modulen (B) lagert.

9. Luftsystem (PᵢBⱼDₖ) nach einem der vorhergehenden Ansprüche,
**dadurch gekennzeichnet, dass** die aerostatischen Module (B) eine Tragstruktur (S) mit geschlossener oder offener toroidaler Geometrie umfassen und mit einem leichteren Gas als Luft gefüllt sind.

10. Luftsystem (PᵢBⱼDₖ) nach dem vorhergehenden Anspruch,
**dadurch gekennzeichnet, dass** mindestens eine Tragstruktur (S) Mittel umfasst, um das motorisierte Luftfahrzeug (Dₖ), das ein Paket (Pᵢ) trägt, zumindest teilweise in einem zentralen Teil (C) der Tragstruktur aufzunehmen, sowie Mittel, um das motorisierte Luftfahrzeug (Dₖ) an die Tragstruktur anzukoppeln.

11. Luftsystem (PᵢBⱼDₖ) nach einem der Ansprüche 9 oder 10,
**dadurch gekennzeichnet, dass** mindestens eine Tragstruktur (S) Mittel zur Aufnahme des mindestens einen Pakets (Pᵢ) in einem zentralen Teil (C) der Tragstruktur umfasst.

12. Luftsystem (PᵢBⱼDₖ) nach dem vorhergehenden Anspruch,
**dadurch gekennzeichnet, dass** mindestens eine Tragstruktur (S) Mittel zum Andocken des motorisierten Luftfahrzeugs (Dₖ) an das aerostatische Modul (B) umfasst.

13. Luftsystem (PᵢBⱼDₖ) nach einem der vorhergehenden Ansprüche,
**dadurch gekennzeichnet, dass** es mit einer Kontroll- und Verarbeitungsstelle (10) zusammenarbeitet, die dazu vorgesehen ist, eine Transportstrategie zu berechnen, die für jedes Paket (Pᵢ) geeignet ist, das von einem Mitnahmeort (1) zu einem Lieferort (2) transportiert werden soll.

14. Luftsystem (PᵢBⱼDₖ) nach dem vorhergehenden Anspruch,
**dadurch gekennzeichnet, dass** die Kontroll- und Verarbeitungsstelle (10) Mittel umfasst, um in Abhängigkeit vom Gewicht des zu liefernden Pakets (Pᵢ) und der Mitnahmestelle (1) die Anzahl der zu verteilenden aerostatischen Module (B) und die zu verwendende Lager- und Verteilungsstelle (3) zu bestimmen, sowie Mittel zur Steuerung einer Kopplungssequenz des motorisierten Luftfahrzeugs (Dₖ) an die aerostatische Vorrichtung (Bⱼ) an der Lager- und Verteilungsstelle (3).

15. Luftsystem (PᵢBⱼDₖ) nach einem der Ansprüche 13 oder 14,
**dadurch gekennzeichnet, dass** die Kontroll- und Verarbeitungsstelle (10) außerdem Mittel umfassen kann, um in Abhängigkeit von einer gewünschten Liefergeschwindigkeit die Anzahl der zusätzlich zu verteilenden motorisierten Luftfahrzeuge zu bestimmen.

16. Luftsystem (PᵢBⱼDₖ) nach einem der Ansprüche 13 bis 15,
**dadurch gekennzeichnet, dass** die Kontroll- und Verarbeitungsstelle (10) außerdem Mittel zum Steuern einer Sequenz zum Abkoppeln des motorisierten Luftfahrzeugs (Dₖ) von der aerostatischen Vorrichtung (Bⱼ) an dem Rückgewinnungs- und Lagerort (4) umfasst.

17. Verfahren zum Lufttransport von Paketen, das in einem Luftsystem (PᵢBⱼDₖ) nach einem der vorhergehenden Ansprüche für den Transport und die Lieferung mindestens eines Pakets von einem Mitnahmeort (1) zu einem Lieferort (2) umgesetzt wird, umfassend eine Kopplung von mindestens einem motorisierten Luftfahrzeug ohne menschlichen Piloten an Bord (Dₖ) mit mindestens einer nicht motorisierten aerostatischen Vorrichtung (Bⱼ), die einen aerostatischen Auftrieb aufweist, wobei das mindestens eine motorisierte Luftfahrzeug und die mindestens eine nicht motorisierte aerostatische Vorrichtung zusammenwirken, um mindestens ein Paket (Pᵢ) von einem Mitnahmeort (1) zu einem Lieferort (2) zu transportieren,
**dadurch gekennzeichnet, dass** es außerdem eine Sequenz (I) des Transfers des motorisierten Luftfahrzeugs (Dₖ) zu einem Ort (3) der Lagerung und Verteilung von aerostatischen Modulen (B) umfasst, die jeweils einen vorbestimmten modularen aerostatischen Auftrieb aufweisen, wobei sich der Lager- und Verteilungsort (3) in der Nähe des Mitnahmeortes (1) befindet und so konfiguriert ist, dass er auf Anfrage eine Gesamtheit von j aerostatischen Modulen ausgibt, die durch Kopplungsmittel fest miteinander verbunden sind, so dass eine aerostatische Vorrichtung (Bⱼ) bereitgestellt wird, die aus den j aerostatischen Modulen besteht und einen statischen Auftrieb aufweist, der im Wesentlichen größer oder gleich dem Gesamtgewicht des zu transportierenden Pakets (Pᵢ) und der aerostatischen Vorrichtung (Bⱼ) ist.

18. Transportverfahren nach Anspruch 17, **dadurch gekennzeichnet, dass** während der Übergabesequenz (I) das motorisierte Luftfahrzeug (Dₖ) das zu liefernde Paket (Pᵢ) trägt.

19. Transportverfahren nach Anspruch 17, **dadurch gekennzeichnet, dass** das zu liefernde Paket (Pᵢ) zuvor an der aerostatischen Vorrichtung (Bⱼ) befestigt wird.

20. Transportverfahren nach einem der Ansprüche 17 bis 19,
**dadurch gekennzeichnet, dass** es außerdem eine Sequenz (II) der Kopplung der aerostatischen Vorrichtung (Bⱼ) mit dem motorisierten Luftfahrzeug (Dₖ) umfasst, gefolgt von einer Sequenz des Transports des zu liefernden Pakets (Pᵢ) durch die gekoppelte Einheit, die aus der aerostatischen Vorrichtung (Bⱼ) und dem motorisierten Luftfahrzeug (Dₖ) besteht.

21. Transportverfahren nach dem vorhergehenden Anspruch,
**dadurch gekennzeichnet, dass** es außerdem eine Sequenz (III) zum Abkoppeln des motorisierten Flugzeugs (Dₖ) von der aerostatischen Vorrichtung (Bⱼ) an einem Ort (4) zum Rückgewinnen und Lagern von aerostatischen Modulen (B) umfasst, der sich in der Nähe des Lieferorts (2) befindet und so konfiguriert ist, dass er die j aerostatischen Module (B) sammelt.

22. Transportverfahren nach dem vorhergehenden Anspruch,
**dadurch gekennzeichnet, dass** es außerdem im Anschluss an die Entkopplungssequenz eine Sequenz des Transports des Pakets (Pᵢ) durch das motorisierte Luftfahrzeug (Dₖ) von dem Rückgewinnungs- und Lagerort (4) zum Lieferort (2) umfasst.

23. Transportverfahren nach einem der Ansprüche 17 bis 22, **dadurch gekennzeichnet, dass** es außerdem eine Sequenz (V) zum Konfigurieren einer aerostatischen Vorrichtung (Bⱼ) aus einer Kombination von j aerostatischen Modulen (B) umfasst, so dass der Auftrieb der so konfigurierten aerostatischen Vorrichtung (Bⱼ) im Wesentlichen größer oder gleich dem Gesamtgewicht des Pakets (Pᵢ) und der aerostatischen Vorrichtung (Bⱼ) ist.

24. Transportverfahren nach Anspruch 23, **dadurch gekennzeichnet, dass** die Sequenz (V) der Konfiguration der aerostatischen Vorrichtung (Bⱼ) aus einer Kombination von j aerostatischen Modulen (B) außerdem so angeordnet ist, dass der Auftrieb der so konfigurierten aerostatischen Vorrichtung (Bⱼ) im Wesentlichen größer oder gleich dem Gesamtgewicht des Pakets (Pᵢ), der aerostatischen Vorrichtung (Bⱼ) und des mindestens einen motorisierten Luftfahrzeugs (Dₖ) ist.

25. Transportverfahren nach einem der Ansprüche 17 bis 24,
**dadurch gekennzeichnet, dass** es außerdem eine Anfangssequenz (0) zur Berechnung einer Transportstrategie umfasst, die für jedes Paket (Pᵢ) geeignet ist, das von einem Mitnahmeort (1) zu einem Lieferort (2) transportiert werden soll.

26. Transportverfahren nach Anspruch 25, **dadurch gekennzeichnet, dass** die Anfangssequenz (0) einen Schritt zur Bestimmung der Anzahl der zu verteilenden aerostatischen Module (B) und des zu verwendenden Lager- und Verteilungsortes (3) in Abhängigkeit vom Gewicht des zu liefernden Pakets (Pᵢ) und des Mitnahmeortes (1) sowie einen Schritt zur Steuerung einer Kopplung des motorisierten Luftfahrzeugs (Dₖ) an die aerostatische Vorrichtung (Bⱼ) am Lager- und Verteilungsort (3) umfasst.

27. Transportverfahren nach einem der Ansprüche 17 bis 26,
**dadurch gekennzeichnet, dass** es außerdem einen Schritt zum Verteilen mindestens eines zusätzlichen motorisierten Luftfahrzeugs und zum Ankoppeln dieses Luftfahrzeugs an das Luftsystem umfasst.

28. Transportverfahren nach einem der Ansprüche 17 bis 27, wobei mindestens ein Schritt des Verfahrens in eine Blockchain eingeschrieben wird, um die Daten des Schritts unveränderlich, transparent und mit einem Zeitstempel zu versehen.

29. Nicht motorisierte aerostatische Vorrichtung (Bⱼ), die in einem Luftsystem zum Transport und zur Auslieferung von Paketen ohne menschlichen Piloten an Bord (PᵢBⱼDₖ) ach einem der Ansprüche 1 bis 16 eingesetzt wird und so beschaffen ist, dass sie an mindestens ein motorisiertes Luftfahrzeug ohne menschlichen Piloten an Bord (Dₖ) gekoppelt werden kann und mit dem motorisierten Luftfahrzeug zusammenwirkt, um mindestens ein Paket (Pᵢ) von einem Mitnahmeort (1) zu einem Auslieferungsort (2) zu transportieren, wobei die mindestens eine aerostatische Vorrichtung (Bⱼ) so konfiguriert ist, dass ihr aerostatischer Auftrieb im Wesentlichen größer oder gleich dem Gesamtgewicht des mindestens einen zu transportierenden Pakets (Pᵢ) und der aerostatischen Vorrichtung (Bⱼ) ist,
**dadurch gekennzeichnet, dass** sie ausgehend von einer Gesamtheit von aerostatischen Modulen (B) hergestellt wird, die jeweils einen vorbestimmten modularen aerostatischen Auftrieb aufweisen, wobei die Anzahl der aerostatischen Module so bestimmt wird, dass ein statischer Auftrieb erhalten wird, der im Wesentlichen größer oder gleich dem kumulierten Gewicht des zu transportierenden Pakets (Pᵢ) und der aerostatischen Vorrichtung (Bⱼ) ist.

30. Aerostatische Vorrichtung nach Anspruch 29,
**dadurch gekennzeichnet, dass** die Anzahl der aerostatischen Module so bestimmt wird, dass ein statischer Auftrieb erzielt wird, der im Wesentlichen größer oder gleich dem kumulierten Gewicht des zu transportierenden Pakets (Pᵢ), der aerostatischen Vorrichtung (Bⱼ) und des motorisierten Luftfahrzeugs ist.

31. Aerostatische Vorrichtung nach einem der Ansprüche 29 oder 30, **dadurch gekennzeichnet, dass** die sie bildenden aerostatischen Module so angeordnet sind, dass sie einen Behälter bilden, der dazu vorgesehen ist, darin ein oder mehrere Pakete aufzunehmen.

## Claims

1. An unmanned aerial system for transporting and delivering packages (PᵢBⱼDₖ), comprising:
- at least one unmanned motorized aircraft (Dₖ),
- at least one non-motorized aerostatic device (Bⱼ) having aerostatic lift and being able to be coupled to said at least one motorized aircraft,
said at least one motorized aircraft and said at least one non-motorized aerostatic device cooperating to transport at least one package (Pᵢ) from a take-off site (1) to a delivery site (2),
**characterized in that** said at least one aerostatic device (Bⱼ) (i) is made up of j aerostatic modules each having a predetermined modular aerostatic lift and secured therebetween by coupling means, so that said at least one aerostatic device (Bⱼ) has a static lift substantially greater than or equal to the overall weight of the package (Pᵢ) to be transported and of said aerostatic device (Bⱼ), said j aerostatic modules being adapted to be delivered on demand by a site (3) for storing and distributing aerostatic modules (B), said storage and distribution site (3) being located close to the take-off site (1).

2. The aerial system according to claim 1, **characterized in that** the at least one storage and distribution site is further configured to deliver a set of j modules so as to provide an aerostatic device having a static lift substantially greater than or equal to the overall weight of said at least one package, said aerostatic device and said at least one motorized aircraft.

3. The aerial system (PᵢBⱼDₖ) according to one of the preceding claims, **characterized in that** the at least one storage and distribution site (3) comprises means (30) for coupling the aerostatic device (Bⱼ) resulting from the j secured aerostatic modules (B) to the motorized aircraft (Dₖ).

4. The aerial system (PᵢBⱼDₖ) according to one of the preceding claims, **characterized in that** it cooperates with at least one site (4) for the recovery and storage of aerostatic modules (B), said recovery and storage site (4) being located close to the delivery site (2) and being configured to collect the j aerostatic modules (B) previously decoupled from the motorized aircraft (Dₖ).

5. The aerial system (PᵢBⱼDₖ) according to the preceding claim,
**characterized in that** the at least one recovery and storage site (4) comprises means (40) for decoupling the aerostatic device (Bⱼ) from the motorized aircraft (Dk).

6. The aerial system (PᵢBⱼDₖ) according to one of the preceding claims,
**characterized in that** it further comprises means (41) for separating the j aerostatic modules (B).

7. The aerial system (PᵢBⱼDₖ) according to one of the preceding claims,
**characterized in that** at least one distribution and storage site is configured to also provide the recovery and storage functions.

8. The aerial system (PᵢBⱼDₖ) according to one of the preceding claims,
**characterized in that** at least one storage and distribution site (3) and/or at least one recovery and storage site (4) comprises a silo (5) arranged to store a stack of aerostatic modules (B).

9. The aerial system (PᵢBⱼDₖ) according to any one of the preceding claims, **characterized in that** the aerostatic modules (B) comprise a support structure (S) of closed or open toroidal geometry and filled with a gas lighter than air.

10. The aerial system (PᵢBⱼDₖ) according to the preceding claim,
**characterized in that** at least one support structure (S) comprises means for receiving at least part of the motorized aircraft (Dₖ) carrying a package (Pᵢ), in a central part (C) of said support structure, and means for coupling said motorized aircraft (Dₖ) to said support structure.

11. The aerial system (PᵢBⱼDₖ) according to one of the claims 9 or 10,
**characterized in that** at least one support structure (S) comprises means for receiving the at least one package (Pᵢ) in a central part (C) of said support structure.

12. The aerial system (PᵢBⱼDₖ) according to the preceding claim,
**characterized in that** at least one support structure (S) comprises means for securing the motorized aircraft (Dₖ) to the aerostatic module (B).

13. The aerial system (PᵢBⱼDₖ) according to any one of the preceding claims,
**characterized in that** it cooperates with a control and processing site (10) provided for calculating a transport strategy adapted to each package (Pᵢ) intended to be transported from a take-off site (1) to a delivery site (2).

14. The aerial system (PᵢBⱼDₖ) according to the preceding claim,
**characterized in that** the control and processing site (10) comprises means for determining, depending on the weight of the package (Pᵢ) to be delivered and the take-off site (1), the number of aerostatic modules (B) to be distributed and the storage and distribution site (3) to be used, and means for controlling a sequence for coupling the motorized aircraft (Dₖ) to the aerostatic device (Bⱼ) on said storage and distribution site (3).

15. The aerial system (PᵢBⱼDₖ) according to one of claims 13 or 14,
**characterized in that** the control and processing site (10) may further comprise means for determining, as a function of a desired delivery speed, the number of additional motorized aircraft to be distributed.

16. The aerial system (PᵢBⱼDₖ) according to one of claims 13 to 15,
**characterized in that** the control and processing site (10) further comprises means for controlling a sequence for decoupling the motorized aircraft (Dₖ) from the aerostatic device (Bⱼ) on the recovery and storage site (4).

17. Method for the air transport of packages, implemented in an aerial system (PᵢBⱼDₖ) according to one of the preceding claims for the transport and delivery of at least one package from a take-off site (1) to a delivery site (2) comprising coupling at least one unmanned motorized aircraft (Dₖ) with at least one non-motorized aerostatic device (Bⱼ) having aerostatic lift, said at least one motorized aircraft and said at least one non-motorized aerostatic device cooperating to transport at least one package (Pᵢ) from a take-off site (1) to a delivery site (2),
**characterized in that** it further comprises a sequence (I) for transferring from the motorized aircraft (Dₖ) to a site (3) for storing and distributing aerostatic modules (B) each having a predetermined modular aerostatic lift, said storage and distribution site (3) being located in the vicinity of the take-off site (1) and being configured to deliver a set of j aerostatic modules on demand, which modules are secured by coupling means, so as to supply an aerostatic device (Bⱼ) made up of said j aerostatic modules and having a static lift that is substantially greater than or equal to the overall weight of the package (Pᵢ) to be transported and of said aerostatic device (Bⱼ).

18. The transport method according to claim 17, **characterized in that** during the transfer sequence (I), the motorized aircraft (Dₖ) carries the package (Pᵢ) to be delivered.

19. The transport method according to claim 17, **characterized in that** the package to be delivered (Pᵢ) is fixed beforehand to the aerostatic device (Bⱼ).

20. The transport method according to one of claims 17 to 19,
**characterized in that** it further comprises a sequence (II) for coupling the aerostatic device (Bⱼ) with the motorized aircraft (Dₖ), followed by a sequence for transporting the package (Pᵢ) to be delivered by the coupled assembly composed of the aerostatic device (Bⱼ) and the motorized aircraft (Dₖ).

21. The transport method according to the preceding claim,
**characterized in that** it further comprises a sequence (III) for decoupling the motorized aircraft (Dₖ) from the aerostatic device (Bⱼ) on a recovery and storage site (4) for aerostatic modules (B) located close to the delivery site (2) and configured to collect the j aerostatic modules (B).

22. The transport method according to the preceding claim,
**characterized in that** it further comprises, following the decoupling sequence, a sequence for transporting the package (Pᵢ) by the motorized aircraft (Dₖ) from the recovery and storage site (4) to the delivery site (2).

23. The transport method according to any one of claims 17 to 22,
**characterized in that** it further comprises a sequence (V) for configuring an aerostatic device (Bⱼ) from a combination of j aerostatic modules (B) so that the lift of said aerostatic device (Bⱼ) thus configured is substantially greater than or equal to the overall weight of said package (Pᵢ) and of said aerostatic device (Bⱼ).

24. The transport method according to claim 23, **characterized in that** the sequence (V) for configuring the aerostatic device (Bⱼ) from a combination of j aerostatic modules (B) is further arranged so that the lift of said aerostatic device (Bⱼ) thus configured is substantially greater than or equal to the overall weight of said package (Pᵢ), of said aerostatic device (Bⱼ) and of said at least one motorized aircraft (Dₖ).

25. The transport method according to any of claims 17 to 24,
**characterized in that** it further comprises an initial sequence (0) for calculating a transport strategy adapted to each package (Pᵢ) intended to be transported from a take-off site (1) to a delivery site (2).

26. The transport method according to claim 25, **characterized in that** the initial sequence (0) comprises a step to determine, depending on the weight of the package (Pᵢ) to be delivered and the take-off site (1), the number of aerostatic modules (B) to be distributed and the storage and distribution site (3) to be used, and a step to check a coupling of the motorized aircraft (Dₖ) to the aerostatic device (Bⱼ) on the storage and distribution site (3).

27. The transport method according to any one of claims 17 to 26,
**characterized in that** it further comprises a step to distribute at least one additional motorized aircraft and to couple it to the aerial system.

28. Transport method according to one of claims 17 to 27, wherein at least one step of said method is registered on a blockchain in such a way as to make the data of said step immutable, transparent and timestamped.

29. Non-motorized aerostatic device (Bⱼ) implemented in an unmanned aerial system for transporting and delivering packages (PᵢBⱼDₖ) according to one of claims 1 to 16, adapted to be coupled to at least one unmanned motorized aircraft (Dₖ) and to cooperate with said motorized aircraft to transport at least one package (Pᵢ) from a take-off site (1) to a delivery site (2), said at least one aerostatic device (Bⱼ) being configured so that its aerostatic lift is substantially greater than or equal to the overall weight of said at least one package (Pᵢ) to be transported and said aerostatic device (Bⱼ),
**characterized in that** it is made from a set of aerostatic modules (B) each having a predetermined modular aerostatic lift, the number of aerostatic modules being determined so as to obtain a static lift substantially greater than or equal to the cumulative weight of the package (Pᵢ) to be transported and of said aerostatic device (Bⱼ).

30. The aerostatic device according to claim 29, **characterized in that** the number of aerostatic modules is determined so as to obtain a static lift substantially greater than or equal to the cumulative weight of the package (Pᵢ) to be transported, of said aerostatic device (Bⱼ) and of said motorized aircraft.

31. The aerostatic device according to one of claims 29 or 30,
**characterized in that** the aerostatic modules constituting it are arranged to produce a container intended to receive one or more packages therein.
